# EUROPÄISCHE PATENTSCHRIFT

(11) **EP 1 781 968 B1**
(45) Veröffentlichungstag und Bekanntmachung des Hinweises auf die Patenterteilung: **12.09.2012**
(21) Anmeldenummer: 05776260.1
(22) Anmeldetag: 30.07.2005
(51) Int. Cl.: F16H 61/04, F16H 3/093

(54) **LASTSCHALTGETRIEBE UND SCHALTVERFAHREN DAFÜR**
POWERSHIFT GEARBOX AND SHIFTING METHOD THEREFOR
BOITE DE VITESSES COUPLABLE SOUS CHARGE, ET PROCEDE DE COUPLAGE CORRESPONDANT

(30) Priorität: 27.08.2004 DE 102004041525
(43) Veröffentlichungstag der Anmeldung: 09.05.2007
(73) Patentinhaber: GM Global Technology Operations LLC, Detroit, MI 48265-3000 (US)
(72) Erfinder: REMMLER, Mathias, 67294 Mauchenheim (DE)
(74) Vertreter: Spitzfaden, Ralf
(86) Internationale Anmeldenummer: PCT/EP2005/008286
(87) Internationale Veröffentlichungsnummer: WO 2006/024352

(56) Entgegenhaltungen:
- EP-A- 1 028 270
- WO-A-01/88409
- DE-A1- 10 338 558
- DE-A1- 19 924 501
- FR-A- 2 838 174
- US-A- 5 761 961

## Beschreibung

Die vorliegende Erfindung betrifft ein Lastschaltgetriebe, das ohne Zugkraftunterbrechung zwischen verschiedenen Gängen umschaltbar ist, und ein Schaltverfahren für ein solches Getriebe.

Ein herkömmliches Getriebe dieser Art ist in DE 42 06 033 C2 beschrieben. Dieses bekannte Getriebe kann aufgefasst werden als aufgebaut aus zwei Getriebeblöcken, in denen jeweils unterschiedliche Übersetzungsverhältnisse bzw. Gänge zwischen einer Eingangswelle und einer Ausgangswelle jedes Getriebeblocks einstellbar sind. Das Getriebe umfasst ferner zwei durch den selben Motor antreibbare Antriebswellen und zwei Schaltkupplungen, die jeweils zwischen einer dieser Antriebswellen und der Eingangswelle eines Getriebeblocks angeordnet sind.

Wenn nicht gerade zwischen zwei Gängen umgeschaltet wird, ist jeweils eine der zwei Schaltkupplungen geöffnet und die andere geschlossen, und Drehmoment wird vom Motor über die geschlossene Schaltkupplung und den daran angeschlossenen Getriebeblock auf eine beiden Getriebeblöcken gemeinsame Abtriebswelle übertragen.

Um bei dem bekannten Getriebe einen Gangwechsel durchzuführen, wird zunächst der neu einzulegende Gang in dem unbelasteten Getriebeblock vorgewählt, d.h., es wird in dem Getriebeblock eine drehmomentschlüssige Verbindung zwischen der Abtriebswelle und dem dem lastfreien Getriebeblock zugewandten Teil von dessen Schaltkupplung hergestellt. Der motorseitige Teil derselben Schaltkupplung ist hingegen direkt über die Antriebswelle angetrieben. Die zwei Kupplungsteile rotieren daher mit unterschiedlichen Geschwindigkeiten, deren Verhältnis durch die Übersetzungsverhältnisse des aktuell eingelegten Gangs und des vorgewählten Gangs bestimmt ist. -

Um den vorgewählten Gang tatsächlich einzulegen, wird diese Schaltkupplung des bislang lastfreien Getriebeblocks allmählich geschlossen, so dass ein Teil des Motordrehmoments über sie übertragen wird, während gleichzeitig die Schaltkupplung des bislang belasteten Getriebeblocks allmählich geöffnet wird, so dass das von dieser Kupplung übertragene Moment geringer wird. Da die zwei Schaltkupplungen niemals gleichzeitig offen sind, läuft der Gangwechsel ohne eine Unterbrechung der Zugkraftübertragung ab, allerdings tritt zwangsläufig zwischen den Teilen der Schaltkupplungen ein Schlupf auf, solange der Schaltvorgang andauert.

Als Schaltkupplungen für ein solches Getriebe kommen also nur schlupffähige Kupplungen in Betracht. Die erforderliche Größe der Kupplungen ist durch die Notwendigkeit bestimmt, bei geschlossener Kupplung das gesamte Motormoment auf das Getriebe übertragen zu können; die zwei Schaltkupplungen haben daher einen beträchtlichen Platzbedarf. Außerdem tragen sie in nicht unerheblichem Maße zu den Kosten des Getriebes bei.

*Aus* DE 199 24 501 A1 *ist ein Lastschaltgetriebe nach dem Oberbegriff des Anspruchs 1 bekannt. Dieses Getriebe weist eine einzige schlupffähige Kupplung auf, die wahlweise einem der beiden Getriebeblöcke zuordenbar ist, während der jeweils andere Getriebeblock über eine formschlüssige Kupplung angetrieben ist.* DE 199 24 501 A1 bildet auch den Stand der Technik zu Anspruch 8.

Aufgabe der vorliegenden Erfindung ist, ein kompakt und preiswert realisierbares Lastschaltgetriebe zum unterbrechungsfreien Schalten zu schaffen.

Die Aufgabe wird erfindungsgemäß gelöst durch einem Lastschaltgetriebe mit den Merkmalen des Anspruchs 1.

Ein kompakter Aufbau wird des Weiteren dadurch erreicht, dass die Eingangswellen der Getriebeblöcke als zur Antriebswelle koaxiale Hohlwellen ausgebildet sind.

In einem Zwischenraum zwischen den zwei Eingangswellen ist vorzugsweise eine über die schlupffähige Kupplung drehantreibbare Zwischenhohlwelle koaxial zur Antriebswelle angeordnet, und die zweiten Kupplungen dienen jeweils dazu, die Zwischenhohlwelle mit den Eingangswellen der Getriebeblöcke zu verbinden.

Für einen platzsparenden Aufbau ist es auch zweckmäßig, wenn die schlupffähige Kupplung koaxial auf der Antriebswelle angeordnet ist.

Um die Abtriebsseite der zur Antriebswelle koaxialen schlupffähigen Kupplung mit den oben erwähnten zweiten Kupplungen zu verbinden, ist vorzugsweise eine zur Antriebswelle parallel versetzte Überbrückungswelle vorgesehen.

Eine weitere schlupffreie Kupplung ist vorzugsweise zwischen jeder Ausgangswelle eines Getriebeblocks und einer gemeinsamen Abtriebswelle des Lastschaltgetriebes vorgesehen. Von diesen Kupplungen ist, sofern nicht gerade zwischen zwei Gängen umgeschaltet wird, zweckmäßigerweise immer eine geöffnet, so dass der jeweils lastfreie Getriebeblock nicht drehangetrieben werden muss und somit auch keine Energieverluste produziert.

Die schlupffreien Kupplungen sind vorzugsweise als Klauenkupplungen ausgebildet.

Gegenstand der Erfindung ist auch ein Verfahren zum Umschalten eines Lastschaltgetriebes der oben beschriebenen Art. Der Umschaltvorgang läuft ab, indem zunächst in einem lastfreien Getriebeblock, im Folgenden als übernehmender Getriebeblock bezeichnet, ein gewünschter Gang eingelegt wird, so dass die Eingangswelle des übernehmenden Getriebeblocks über dessen Ausgangswelle und den momentan noch lastführenden Getriebeblock, im Folgenden als abgebender Getriebeblock bezeichnet, drehangetrieben ist. Über die schlupffähige Kupplung wird der übernehmende Getriebeblock allmählich an die Antriebswelle gekuppelt. Während des allmählichen Kuppelns nimmt der über den übernehmenden Getriebeblock fließende Lastanteil allmählich zu, bis ein Zeitpunkt erreicht ist, an welchem der abgebende Getriebeblock lastfrei wird. Zu diesem Zeitpunkt kann die schlupffreie Kupplung, die den abgebenden Block mit der Antriebswelle verbindet, ausgerückt werden, und der neue Gang ist - zumindest vorläufig - eingelegt.

Da kein erneuter Gangwechsel möglich ist, solange der übernehmende Getriebeblock über die schlupffähige Kupplung angetrieben ist, wird zweckmäßigerweise nach dem Schließen der schlupffähigen Kupplung die Eingangswelle des übernehmenden Getriebeblocks direkt an die Antriebswelle gekuppelt und die schlupffähige Kupplung wieder gelöst.

Um zu gewährleisten, dass die schlupffreie Kupplung des abgebenden Getriebeblocks exakt zum Zeitpunkt des Lastfreiwerdens ausrückt, genügt es, auf diese Kupplung eine Kraft in Richtung einer Ausrückbewegung auszuüben; sobald die Kupplung lastfrei wird, werden ihre Teile gegeneinander beweglich und können der Kraft nachgeben.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine stark schematisierte Darstellung eines erfindungsgemäßen Getriebes im Laufe mehrerer Schritte eines Schaltvorgangs sowie die während dieser Schritte über die Getriebeblöcke geführte Last; und
- Fig. 2: bis
- Fig. 9: den Aufbau eines bevorzugten Ausführungsbeispiels eines erfindungsgemäßen Getriebes sowie den Ablauf eines Schaltvorgangs in diesem Getriebe.

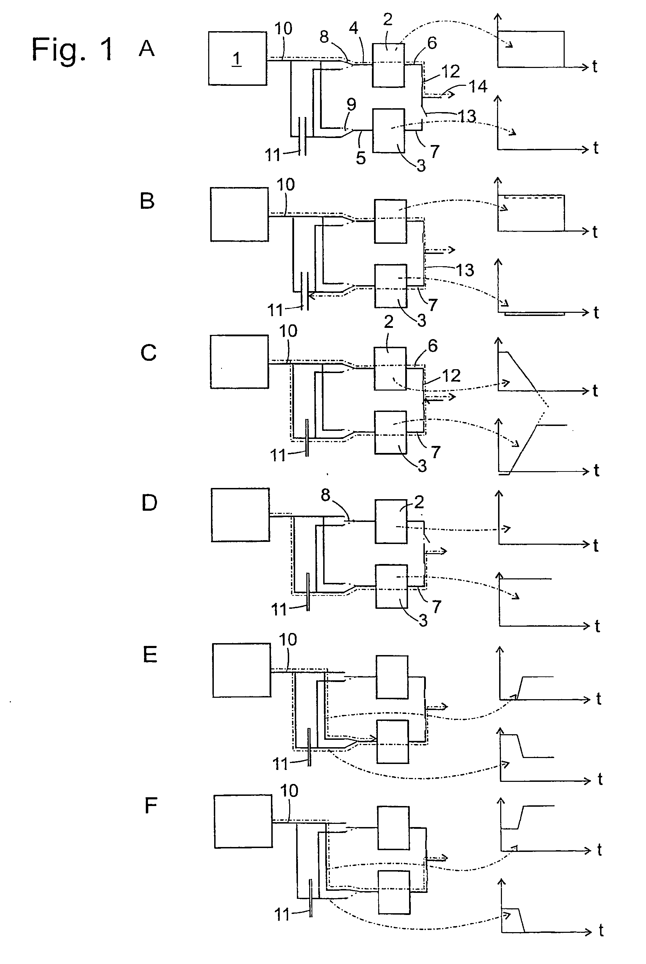

Fig. 1 ist in sechs Teile, mit A bis F bezeichnet, unterteilt, die jeweils den Zustand eines durch einen Motor 1 angetriebenen Lastschaltgetriebes in einem stationären Betriebszustand bzw. in verschiedenen Stadien eines Gangschaltvorgangs zeigen.

Das Lastschaltgetriebe umfasst zwei Getriebeblöcke 2, 3 mit jeweils einer Eingangswelle 4 bzw. 5 und einer Ausgangswelle 6 bzw. 7. In jedem Getriebeblock ist ein vorgegebener Satz von Übersetzungsverhältnissen bzw. von Gängen zwischen der Eingangswelle 4, 5 und der Ausgangswelle 6, 7 einstellbar, wobei die Gänge des ersten Getriebeblocks 3 ungeradzahligen Gängen des gesamten Lastschaltgetriebes, also z.B. den Gängen 1, 3, 5 eines Sechs-Gang-Getriebes, und die des zweiten Getriebeblocks 2 den geradzahligen Gängen, also den Gängen 2, 4,6 entsprechen.

An jeder Eingangswelle 4, 5 ist eine Klauenkupplung 8 bzw. 9 angeordnet, die dazu dient, die zugeordnete Eingangswelle 4 oder 5 an eine von dem Motor 1 angetriebene Antriebswelle 10 unmittelbar oder mittelbar, über eine Rutschkupplung 11, zu koppeln. Die Klauenkupplungen 8, 9 können auch eine offene Stellung aufweisen, in der sie die Eingangswelle 4 bzw. 5 nicht mit dem Motor 1 verbinden.

Die Ausgangswellen 6, 7 der Getriebeblöcke 2, 3 sind jeweils über eine weitere Klauenkupplung 12, 13 mit einer gemeinsamen Abtriebswelle 14 des Lastschaltgetriebes verbindbar.

Fig. 1 zeigt in ihrem Teil A das Lastschaltgetriebe mit einem eingelegten geradzahligen Gang, z.B. dem zweiten Gang. Der Lastfluss vom Motor 1 zur Abtriebswelle 14 ist durch eine entlang der belasteten Teile des Getriebes führende strichpunktierte Linie veranschaulicht. Er führt vom Motor 1 über die Antriebswelle 10 und die geschlossene Klauenkupplung 8 zum Getriebeblock 2, in dem der zweite Gang eingelegt ist, und von diesem über die geschlossene Klauenkupplung 12 zur Abtriebswelle 14. Die Klauenkupplung 13 zwischen Abtriebswelle 14 und Getriebeblock 3 ist offen, genau so wie die Rutschkupplung 11, mit der die Eingangswelle 5 des Getriebeblocks 3 über die Kupplung 9 verbunden ist. Der Getriebeblock 3 ist nicht angetrieben.

Die zwei Diagramme seitlich von der Getriebedarstellung im Teil A von Fig. 1 veranschaulichen jeweils die Last der zwei Getriebeblöcke; der Getriebeblock 2 steht unter einer gleichbleibenden, positiven, d.h. von Motor 1 zur Abtriebswelle 14 fließenden Last, während die des Getriebeblocks 3 verschwindet.

Um einen Gangwechsel vorzubereiten, wird zunächst in dem unbelasteten Getriebeblock 3 der gewünschte Gang voreingestellt. Prinzipiell könnte jeder beliebige Gang dieses Getriebeblöcks 3 eingestellt werden, im Allgemeinen wählt man jedoch ein dem aktuellen Gang benachbarten, also den ersten oder dritten Gang. Als nächstes wird, wie in Teil B gezeigt, die Kupplung 13 geschlossen, so dass der Getriebeblock 3 über seine Abtriebswelle 7 in Drehung versetzt wird. D.h., ein Teil des am Ausgang des Getriebeblocks 2 verfügbaren Drehmomentes wird zum Antreiben des Getriebeblocks 3 verbraucht, und das auf der Abtriebswelle 14 anliegende Drehmoment ist, wie durch den gestrichelten Verlauf in dem oberen Diagramm von Teil B veranschaulicht, geringfügig kleiner als das Gesamtdrehmoment am Ausgang des Getriebeblocks 2. Es gibt einen schwachen Lastfluss von der Abtriebs- zur Antriebsseite im Getriebeblock 3, wie durch das untere Diagramm von Teil B veranschaulicht. In diesem Diagramm ist der Lastfluss, da von der Abtriebs- zur Antriebsseite des Getriebeblocks 3 gerichtet, mit negativem Vorzeichen dargestellt. Es sind nun beide Seiten der Rutschkupplung 11 drehangetrieben, die dem Motor zugewandte Seite mit der Drehzahl der Antriebswelle 10, und die den Getriebeblöcken zugewandte Seite mit einer Drehzahl, die durch das Verhältnis der Übersetzungen der in den Getriebeblöcken 2, 3 eingelegten Gänge bestimmt ist.

Als nächstes wird, wie im Teil C gezeigt, die Rutschkupplung 11 allmählich geschlossen. Dadurch verteilt sich der Lastfluss auf die zwei Getriebeblöcke 2, 3. Betrachtet man als Beispiel konkret den Fall des Umschaltens vom zweiten in den dritten Gang, so erkennt man, dass die Drehzahl des motorseitigen Teils der Kupplung 11 höher sein muss als die des mit dem Getriebeblock 3 verbundenen Teils. Die Kupplung 11 versucht also gewissermaßen, den Getriebeblock 3 zu beschleunigen und den Getriebeblock 2 abzubremsen, wobei allerdings eine Angleichung der Drehzahlen der zwei Teile der Kupplung 11 nicht möglich ist, solange in beiden Getriebeblöcken ein Gang eingelegt ist. Die Drehzahldifferenz führt jedoch dazu, dass der Getriebeblock 3 mit zunehmendem Druck der Kupplung 11 immer mehr Last vom Getriebeblock 2 übernimmt, bis zu einem Zeitpunkt, an welchem die Last des Getriebeblocks 2 verschwindet. Zu diesem Zeitpunkt öffnet die nun lastfrei gewordene Klauenkupplung 8, und das Stadium des Teils D von Fig. 1 ist erreicht. Der Lastfluss verläuft nun ausschließlich über die Rutschkupplung 11 und den Getriebeblock 3.

Solange die Kupplung 11 geschlossen ist, kann kein weiterer Gangwechsel eingeleitet werden. Da aber die Antriebswelle 10 und die dem Getriebe zugewandte Seite der Kupplung 11 gleiche Drehzahlen haben, ist es möglich, eine direkte Lastverbindung zwischen der Antriebswelle 10 und der Eingangswelle 5 über die Kupplungsanordnung 9 herzustellen, wie in Teil E gezeigt, so dass sich der Lastfluss vom Motor 1 zum Getriebeblock 3, wie in den Diagrammen veranschaulicht, auf den direkten Weg und den Weg über die Rutschkupplung 11 verteilt.

Anschließend wird die Verbindung der Eingangswelle 5 zur Kupplung 11 aufgehoben, wie im Teil F gezeigt. Die Rutschkupplung 11 ist nun wieder lastfrei, und der Getriebeblock 3 ist direkt vom Motor 1 angetrieben. Nachdem die Rutschkupplung 11 wieder geöffnet worden ist, kann ein weiterer Gangwechsel wie in den Teilen A bis F dargestellt stattfinden, wobei bei diesem erneuten Gangwechsel die Rollen der Getriebeblöcke 2, 3 vertauscht sind.

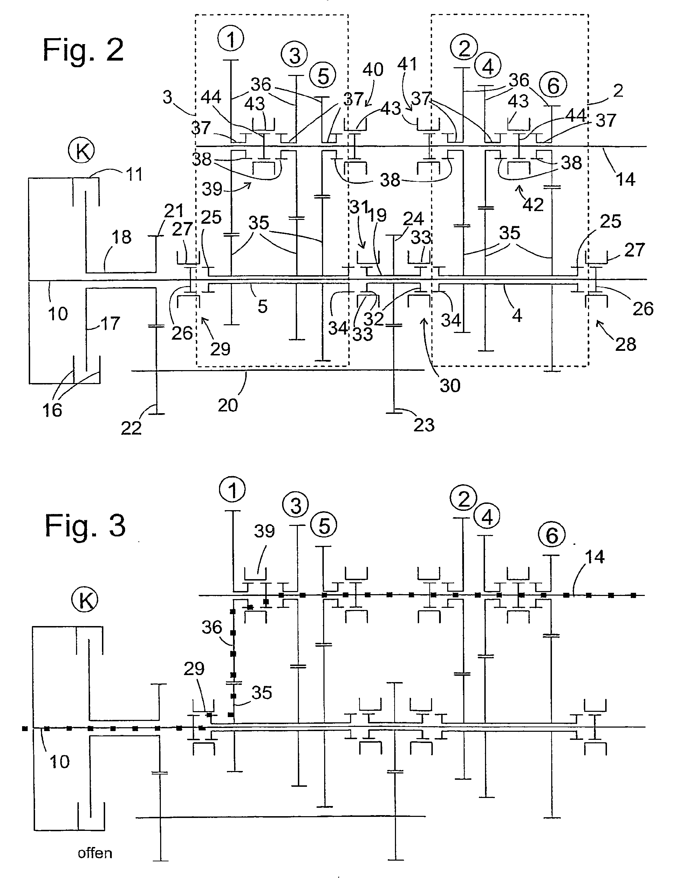

Fig. 2 zeigt in einem detaillierteren Schema den Aufbau eines Lastschaltgetriebes gemäß der Erfindung. Der Motor 1 ist in dieser Figur, wie auch in den folgenden, weggelassen. Die Rutschkupplung 11 ist koaxial auf der Antriebswelle 10 des Getriebes montiert und umfasst eine fest auf der Antriebswelle 10 montierte erste Scheibe mit axial verschiebbaren Klemmen 16 zum Einklemmen einer zweiten Scheibe 17, die auf einer zur Antriebswelle 10 koaxialen Hohlwelle 18 befestigt ist.

Zwei weitere zu der Antriebswelle 10 koaxiale Hohlwellen bilden die Eingangswellen 4 bzw. 5 der zwei Getriebeblöcke 2, 3. Eine zwischen den Hohlwellen 4, 5 an der Antriebswelle 10 angeordnete Zwischenhohlwelle 19 ist an die Hohlwellen 18 über eine zur Antriebswelle 10 parallele Überbrückungswelle 20 und Paare von kämmenden Zahnrädern 21, 22 bzw. 23, 24 der Wellen 18, 20, 19 verbunden.

Die zwei Eingangswellen 4, 5 tragen jeweils an ihren voneinander abgewandten Enden eine Axialverzahnung 25, die zusammen mit einem fest an der Antriebswelle 10 montierten Ritzel 26 und einer auf dem Ritzel 26 axial verschiebbaren innen und axial verzahnten Hülse oder Schaltmuffe 27 eine Klauenkupplung bildet, die an der Antriebswelle 4 des Getriebeblocks 2 zusammenfassend mit 28 bzw. an der Antriebswelle 5 des Getriebeblocks 3 mit 29 bezeichnet ist. Die Klauenkupplungen 28, 29 umfassen ferner in an sich bekannter Weise eine nicht gezeigte Synchronisiereinheit, die dazu dient, eine zum Einrasten der Schaltmuffe 27 in die Axialverzahnung 25 erforderliche Drehzahlangleichung über Kraftschluss, insbesondere durch Reibung, herzustellen. Diese Synchronisiereinheit kann als eine Art von formschlüssiger Vorkupplung aufgefasst werden; sie unterscheidet sich von der ebenfalls formschlüssigen Rutschkupplung 11 durch ihre Dimensionierung: Während die Rutschkupplung 11 ausgelegt ist, um das gesamte Drehmoment des Motors übertragen zu können, genügt bei der Synchronisiereinheit ein maximal übertragbares Drehmoment, das ausreicht, um Trägheit und Reibung des zugehörigen Getriebeblocks 2 oder 3 zu überwinden; eine Übertragung von Antriebsmoment über eine Synchronisiereinheit auf das Fahrwerk ist nicht vorgesehen. Die Synchronisiereinheit kann insbesondere durch Synchronisierringe gebildet sein, wie sie in herkömmlichen manuellen Schaltgetrieben vorzufinden sind. Zum Lösen der Klauenkupplung 28 bzw. 29 muss sie unbelastet sein.

Eine gleichartige Klauenkupplung ist jeweils am gegenüberliegenden Ende der Eingangswellen 4, 5 mit 30 bzw. 31 bezeichnet. Diese Kupplungen 30, 31 umfassen jeweils ein Ritzel 32 an der Zwischenhohlwelle 19, eine an dem Ritzel 32 axial verschiebbare Hülse bzw. Schaltmuffe 33 und eine Axialverzahnung 34 an den Antriebswellen 4 bzw. 5.

Die Antriebswellen 4, 5 tragen ferner in an sich bekannter Weise jeweils drei Gangzahnräder 35 von unterschiedlicher Größe, die jeweils mit einem komplementären Gangzahnrad 36 kämmen, das jeweils über einen hohlen Abtriebswellenabschnitt 37 mit einem Ritzel 38 einer weiteren Klauenkupplung 39, 40, 41 oder 42 verbunden ist. Bei den Kupplungen 39, 42 ist eine Hülse 43 jeweils zwischen drei Stellungen verschiebbar, einer, in der sie nur auf einem fest mit der Abtriebswelle 14 verbundenen Ritzel 44 sitzt, und zweien, in denen sie das Ritzel 44 mit einer rechts oder links benachbarten Axialverzahnung 38 verbindet. Die Kupplungen 41, 42 entsprechen in ihrer Funktion der Kupplung 12 aus Fig. 1, und die Kupplungen 39, 40 der Kupplung 13.

Ein in der Fig. nicht dargestelltes Zahnrad an der Zwischenwelle 20 ist mit einem der Gangzahnräder 36 des Getriebeblocks 3 direkt, unter Umgehung der Hohlwelle 5, in Eingriff bringbar, um einen Rückwärtsgang zu realisieren.

Fig. 3 veranschaulicht den Kraftfluss durch das Getriebe der Fig. 2 in Form einer dicken punktierten Linie. Er verläuft von der Antriebswelle 10 über die geschlossene Kupplung 29, die Gangzahnräder 35, 36 des ersten Gangs im Getriebeblock 3 und die Klauenkupplung 39 zur Abtriebswelle 14. Die Klauenkupplungen 41, 42, 30 sind offen, so dass der Getriebeblock 2 in Ruhe ist.

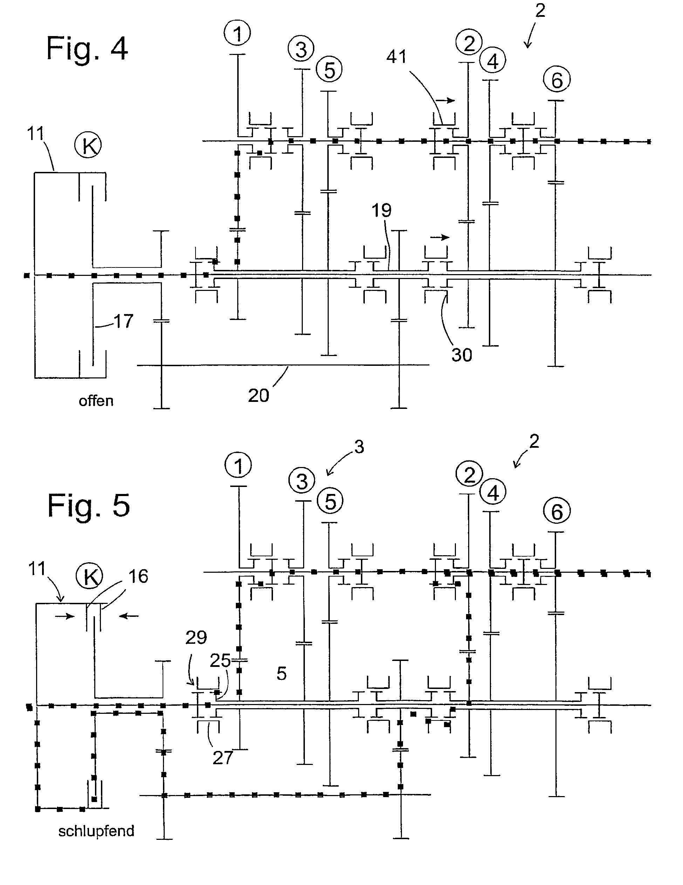

In Fig. 4 wird durch Schließen der Kupplung 41 der zweite Gang als neu einzulegender Gang in der Getriebestufe 2 vorgewählt. Gleichzeitig wird die Kupplung 30 geschlossen, so dass über den Getriebeblock 2, die Zwischenhohlwelle 19 und die Überbrückungswelle 20 die Scheibe 17 der Rutschkupplung 11 in Drehung versetzt wird.

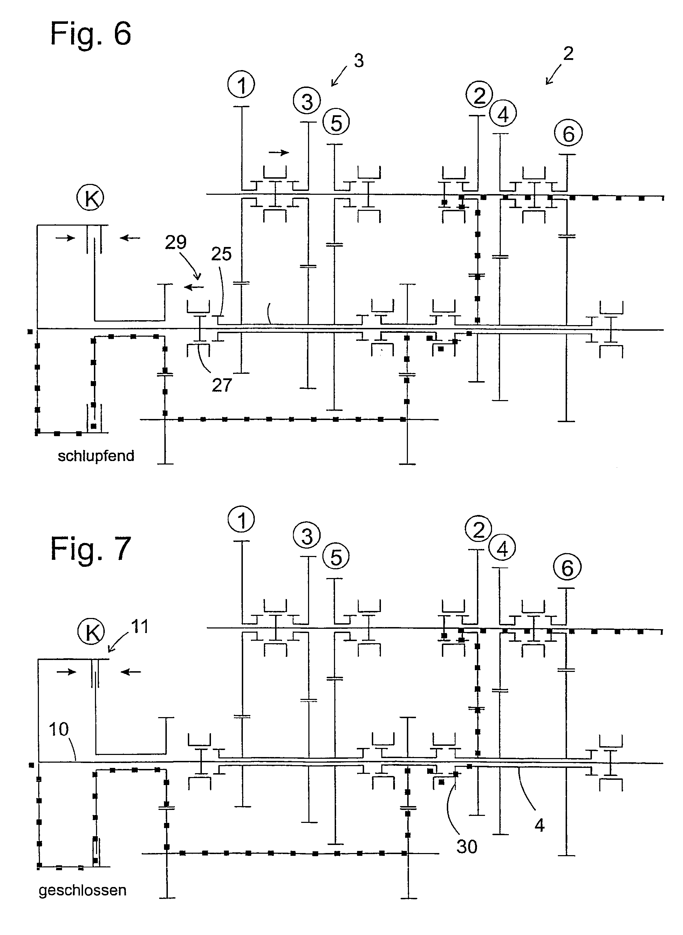

In Fig. 5 werden die Klemmen 16 der Rutschkupplung 11 allmählich geschlossen, so dass sich die Last auf die beiden Getriebeblöcke 2, 3 verteilt. Sobald dadurch die Kupplung 29 lastfrei wird, gibt deren Hülse 27 einer bereits zuvor auf sie ausgeübten Stellkraft nach und gleitet vom Ritzel 25 der Eingangswelle 5 herunter, wie in Fig. 6 gezeigt. Dadurch wird der Getriebeblock 3 lastfrei, und der Lastfluss erfolgt vollständig über den Getriebeblock 2. Die Rutschkupplung 11 kann nun, wie in Fig. 7 gezeigt, vollständig geschlossen werden, um die Antriebskraft des Motors ohne Schlupf zu übertragen.

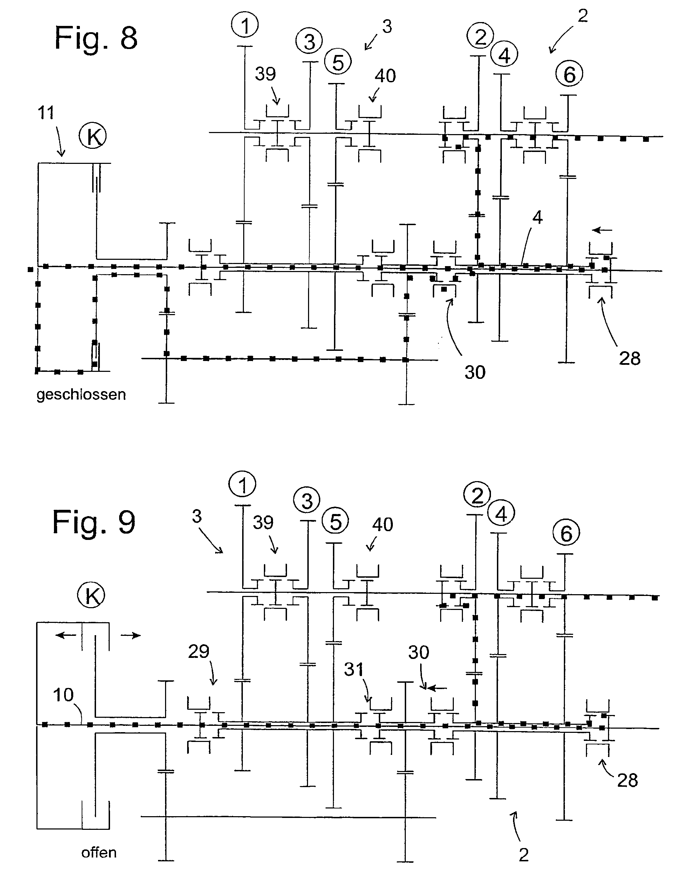

Da nun die Eingangswelle 4 des Getriebeblocks 2 über die Kupplung 30 mit exakt der gleichen Geschwindigkeit angetrieben ist wie die Antriebswelle 10, kann die,Kupplung 28 geschlossen werden, wie in Fig. 8 gezeigt. Die Last verteilt sich nun auf die zwei Kupplungen 28, 30. Im nächsten Schritt wird die Rutschkupplung 11 geöffnet, so dass die Kupplung 30 lastfrei wird und wieder geöffnet werden kann. Es resultiert der in Fig. 9 gezeigte Kraftfluss von der Antriebswelle 10 über die Klauenkupplung 28 und den zweiten Getriebeblock 2. Die Kupplungen 29, 30, 31, 39, 40 sind offen, so dass der Getriebeblock 3 steht. In diesem Getriebeblock 3 kann nun der nächste Gang für einen nachfolgenden Gangwechsel vorgewählt werden.

Der oben beschriebene Verfahrensablauf betraf einen Hochschaltvorgang. Hier ist die Drehzahl des Motors nach dem Schalten niedriger als vorher, und die zum Lastfreiwerden der Klauenkupplung 29 erforderliche Drehzahlangleichung kommt durch Reibungsverluste, insbesondere in der Rutschkupplung 11 im schlupfenden Zustand, zustande, auch wenn der Motor leer läuft. Die Schrittfolge bei einem Herunterschalten ist im Wesentlichen dieselbe wie beim Heraufschalten, mit dem einzigen Unterschied, dass zum Erzielen der Drehzahlangleichung der Motor beschleunigt werden muss.

### Bezugszeichenliste

- Motor: 1
- Getriebeblock: 2
- Getriebeblock: 3
- Eingangswelle: 4
- Eingangswelle: 5
- Ausgangswelle: 6
- Ausgangswelle: 7
- Klauenkupplung: 8
- Klauenkupplung: 9
- Antriebswelle: 10
- Rutschkupplung: 11
- Klauenkupplung: 12
- Klauenkupplung: 13
- Abtriebswelle: 14
- Klemme: 16
- Scheibe: 17
- Hohlwelle .: 18
- Zwischenhohlwelle: 19
- Überbrückungswelle: 20
- Zahnrad: 21
- Zahnrad: 22
- Zahnrad: 23
- Zahnrad: 24
- Axialverzahnung: 25
- Ritzel: 26
- Hülse: 27
- Klauenkupplung: 28
- Klauenkupplung: 29
- Klauenkupplung: 30
- Klauenkupplung: 31
- Ritzel: 32
- Hülse: 33
- Axialverzahnung: 34
- Gangzahnrad: 35
- Gangzahnrad: 36
- Abtriebswellenabschnitt: 37
- Axialverzahnung: 38
- Klauenkupplung: 39
- Klauenkupplung: 40
- Klauenkupplung: 41
- Klauenkupplung: 42
- Hülse: 43
- Ritzel: 44

## Patentansprüche

1. Lastschaltgetriebe mit einem ersten und einem-zweiten Getriebeblock (2; 3), in denen jeweils ein Gang aus einem jedem Getriebeblock (2; 3) zugeordneten ersten bzw. zweiten Satz von Gängen zwischen einer Eingangswelle (4; 5) und einer Ausgangswelle (6; 7) des Getriebeblocks (2; 3) einstellbar ist, *wobei* zwischen jedem Getriebeblock (2; 3) und einer gemeinsamen Antriebswelle (10) des Lastschaltgetriebes eine schlupffreie Kupplungsanordnung (8; 9; 28, 30; 29, 31) vorgesehen ist, die es ermöglicht, die Eingangswelle (4; 5) des Getriebeblocks (2, 3) wahlweise direkt oder über eine gemeinsame schlupffähige Kupplung (11) an die Antriebswelle (10) zu koppeln. **dadurch gekennzeichnet, dass** jede Kupplungsanordnung (8; 9; 28, 30; 29, 31) zwei an entgegengesetzten Enden der Eingangswelle (4; 5) des der Kupplungsanordnung zugeordneten Getriebeblocks (2; 3) angeordnete Kupplungen (28, 30; 29, 31) umfasst, von denen die erste (28; 29) direkt an die Antriebswelle (10) koppelbar und die zweite (30; 31) über die schlupffähige Kupplung (11) an die Antriebswelle (10) koppelbar ist.

2. Lastschaltgetriebe nach *Anspruch 1*, **dadurch gekennzeichnet, dass** die Eingangswellen (4; 5) der Getriebeblöcke (2; 3) zur Antriebswelle (10) koaxiale Hohlwellen sind.

3. Lastschaltgetriebe nach Anspruch 2, **dadurch gekennzeichnet, dass** zwischen den zwei Eingangswellen (4; 5) eine über die schlupffähige Kupplung (11) drehantreibbare Zwischenhohlwelle (19) koaxial zur Antriebswelle (10) angeordnet ist, und dass die zweiten Kupplungen (30, 31) jeweils die Zwischenhohlwelle (19) mit den Eingangswellen (4; 5) der Getriebeblöcke (2; 3) verbinden.

4. Lastschaltgetriebe nach einem der vorhergehenden Ansprüche, **dadurch gekennzeichnet, dass** die schlupffähige Kupplung (11) koaxial auf der Antriebswelle (10) angeordnet ist.

5. Lastschaltgetriebe nach Anspruch *1* oder *3* und Anspruch *4*, **dadurch gekennzeichnet, dass** die Abtriebsseite (17) der schlupffähigen Kupplung (11) mit den zweiten Kupplungen (30, 31) über eine zur Antriebswelle (10) parallel versetzte Überbrückungswelle (20) verbunden ist.

6. Lastschaltgetriebe nach einem der vorhergehenden Ansprüche, **dadurch gekennzeichnet, dass** zwischen jeder Ausgangswelle (6; 7; 37) eines Getriebeblocks (2; 3) und einer gemeinsamen Abtriebswelle (14) des Lastschaltgetriebes jeweils eine schlupffreie Kupplung (12; 13; 39; 40; 41; 42) vorgesehen ist.

7. Lastschaltgetriebe nach einem der vorhergehenden Ansprüche, **dadurch gekennzeichnet, dass** die schlupffreien Kupplungen (8; 9; 12; 13; 28; 29; 30; 31; 39; 40; 41; 42) Klauenkupplungen sind.

8. Verfahren zum Umschalten eines Lastschaltgetriebes nach einem der vorhergehenden Ansprüche, mit den Schritten:
a) Einlegen eines gewünschten Gangs in einem lastfreien Getriebeblock (2; 3), als übernehmender Getriebeblock bezeichnet, so dass die Eingangswelle (4; 5) des übernehmenden Getriebeblocks (2; 3) über dessen Ausgangswelle (12; 13; 37) und den momentan Last führenden Getriebeblock (3; 2), als abgebender Getriebeblock bezeichnet, drehangerieben ist;
b) Allmähliches Kuppeln des übernehmenden Getriebeblocks (2; 3) an die Antriebswelle (10) über die schlupffähige Kupplung (11);
c) während des allmählichen Kuppelns Ausrücken einer den abgebenden Block (3; 2) mit der Antriebswelle (10) verbindenden schlupffreien Kupplung (29) zum Zeitpunkt, in welchem letztere lastfrei wird.

9. Verfahren nach Anspruch *8*, mit den weiteren Schritten:
d) nach dem Schließen der schlupffähigen Kupplung (11) direktes Kuppeln der Eingangswelle (4; 5) des übernehmenden Getriebeblocks (2; 3) an die Antriebswelle (10); und
e) Lösen der schlupffähigen Kupplung (11).

10. Verfahren nach Anspruch *8* oder *9*, bei dem in Schritt c) vor dem Lastfreiwerden der schlupffreien Kupplung (29) begonnen wird, eine Kraft in Richtung einer Ausrückbewegung auf diese Kupplung (29) auszuüben, und die Kupplung (29) zum Zeitpunkt, in welchem sie lastfrei wird, der Kraft nachgibt.

## Claims

1. A powershift transmission, comprising a first and second gearbox unit (2; 3) in which one respective gear of a first and second set of gears associated with each gearbox unit (2; 3) is adjustable between an input shaft (4; 5) and an output shaft (6; 7) of the gearbox unit (2; 3), with a non-slip clutch arrangement (8; 9; 28, 30; 29, 31) being provided between each gearbox unit (2; 3) and a common drive shaft (10) of the powershift transmission, which non-slip clutch arrangement (8; 9; 28, 30; 29, 31) allows coupling the input shaft (4; 5) of the gearbox unit (2, 3) in a selective manner directly or via a common slip-capable clutch (11) to the drive shaft (10), **characterized in that** each clutch arrangement (8; 9; 28, 30; 29, 31) comprises two clutches (28, 30; 29, 31) arranged at opposite ends of the input shaft (4; 5) of the gearbox unit (2; 3) associated with the clutch arrangement, of which the first (28; 29) can be coupled directly with the drive shaft (10) and the second (30; 31) with the drive shaft (10) via the slip-capable clutch (11).

2. A powershift transmission according to claim 1, **characterized in that** the input shafts (4; 5) of the gearbox units (2; 3) to the drive shaft (10) are coaxial hollow shafts.

3. A powershift transmission according to claim 2, **characterized in that** an intermediate hollow shaft (19) which can rotatably be driven by way of a slip-capable clutch (11) is arranged between the two input shafts (4; 5) coaxially to the drive shaft (10), and that the second clutches (30, 31) respectively connect the intermediate hollow shaft (19) with the input shafts (4; 5) of the gearbox units (2; 3).

4. A powershift transmission according to one of the preceding claims, **characterized in that** the slip-capable clutch (11) is arranged coaxially on the drive shaft (10).

5. A powershift transmission according to claim 1 or 3 and claim 4, **characterized in that** the output side (17) of the slip-capable clutch (11) is connected with the second clutches (30, 31) via a bridging shaft (20) which offset in parallel to the drive shaft (10).

6. A powershift transmission according to one of the preceding claims, **characterized in that** one respective slip-free clutch (12; 13; 39; 40; 41; 42) is provided between each output shaft (6; 7; 37) of a gearbox unit (2; 3) and a common output shaft (14) of the powershift transmission.

7. A powershift transmission according to one of the preceding claims, **characterized in that** the slip-free clutches (8; 9; 12; 13; 28; 29; 30; 31; 39; 40; 41; 42) are claw clutches.

8. A method for shifting a powershift transmission according to one of the preceding claims, having the following steps:
a) engaging a desired gear in a load-free gearbox unit (2, 3), which will be known as the receiving gearbox unit, so that the input shaft (4; 5) of the receiving gearbox unit (2; 3) is rotationally driven via its output shaft (12; 13; 37) and the gearbox unit (3; 2) which momentarily carries the load, which will be known as the delivering gearbox unit;
b) gradual clutching of the receiving gearbox unit (2; 3) to the drive shaft (10) via the slip-capable clutch (11);
c) during the gradual clutching the disengagement of a slip-free clutch (29) which connects the delivering unit (3; 2) with the drive shaft (10) at such point in time in which said clutch (29) becomes load-free.

9. A method according to claim 8, having the further steps:
d) direct coupling of the input shaft (4; 5) of the receiving gearbox unit (2; 3) to the drive shaft (10) after closing of the slip-capable clutch (11), and
e) disengagement of the slip-capable clutch (11).

10. A method according to claim 8 or 9, wherein it is started in step c) before the release of load of the slip-free clutch (29) to exert a force in the direction of a disengaging motion on said clutch (29), and the clutch (29) yields to the force at a point in time in which it becomes load-free.

## Revendications

1. Boîte de vitesses avec un premier bloc d'engrenages et un deuxième (2 ; 3) dans lesquels un rapport d'un premier ou d'un deuxième jeu de rapports associé à chaque bloc d'engrenages (2 ; 3) peut être réglé entre un arbre d'entrée (4 ; 5) et un arbre de sortie (6 ; 7) du bloc d'engrenages (2 ; 3), dans lequel il est prévu entre chaque bloc d'engrenages (2 ; 3) et un arbre d'entraînement (10) commun de la boîte de vitesses un dispositif d'embrayage sans friction (8 ; 9 ; 28, 30 ; 29, 31) qui permet de coupler l'arbre d'entrée (4 ; 5) du bloc d'engrenages (2, 3) à l'arbre d'entraînement (10) soit directement, soit par l'intermédiaire d'un embrayage à friction commun (11), **caractérisée en ce que** chaque dispositif d'embrayage (8 ; 9 ; 28, 30 ; 29, 31) comprend deux embrayages (28, 30 ; 29, 31) disposés à des extrémités opposées de l'arbre d'entrée (4 ; 5) du bloc d'engrenages (2 ; 3) associé au dispositif d'embrayage, dont le premier (28 ; 29) peut être couplé directement à l'arbre d'entraînement (10) et le deuxième (30 ; 31) peut être couplé à l'arbre d'entraînement (10) par l'intermédiaire de l'embrayage à friction (11).

2. Boîte de vitesses selon la revendication 1, **caractérisée en ce que** les arbres d'entrée (4 ; 5) des blocs d'engrenages (2 ; 3) vers l'arbre d'entraînement (10) sont des arbres creux coaxiaux.

3. Boîte de vitesses selon la revendication 2, **caractérisée en ce qu'**il est prévu entre les deux arbres d'entrée (4 ; 5) un arbre creux intermédiaire (19) coaxial de l'arbre d'entraînement (10) et pouvant être entraîné en rotation par l'embrayage à friction (11) et **en ce que** les deuxièmes embrayages (30, 31) relient chacun l'arbre creux intermédiaire (19) aux arbres d'entrée (4 ; 5) des blocs d'engrenages (2 ; 3).

4. Boîte de vitesses selon l'une des revendications précédentes, **caractérisée en ce que** l'embrayage à friction (11) est disposé de façon coaxiale sur l'arbre d'entraînement (10).

5. Boîte de vitesses selon la revendication 1 ou 3 et la revendication 4, **caractérisée en ce que** le côté mené (17) de l'embrayage à friction (11) est relié aux deuxièmes embrayages (30, 31) par l'intermédiaire d'un arbre de pontage (20) décalé parallèlement par rapport à l'arbre d'entraînement (10).

6. Boîte de vitesses selon l'une des revendications précédentes, **caractérisée en ce qu'**un embrayage sans friction (12 ; 13 ; 39 ; 40 ; 41 ; 42) est prévu entre chaque arbre de sortie (6 ; 7 ; 37) d'un bloc d'engrenages (2 ; 3) et un arbre mené commun (14) de la boîte de vitesses.

7. Boîte de vitesses selon l'une des revendications précédentes, **caractérisée en ce que** les embrayages sans friction (8 ; 9 ; 12 ; 13 ; 28 ; 29 ; 30 ; 31 ; 39 ; 40 ; 41 ; 42) sont des embrayages à griffes.

8. Procédé pour le changement de rapport d'une boîte de vitesses selon l'une des revendications précédentes, comprenant les étapes suivantes :
a) passage d'un rapport souhaité dans un bloc d'engrenages (2 ; 3) hors charge, appelé bloc d'engrenages receveur, de telle façon que l'arbre d'entrée (4 ; 5) du bloc d'engrenages receveur (2 ; 3) soit entraîné en rotation par l'intermédiaire de son arbre de sortie (12 ; 13 ; 37) et du bloc d'engrenages (3 ; 2) conduisant la charge, appelé bloc d'engrenages fournisseur ;
b) couplage progressif du bloc d'engrenages receveur (2 ; 3) à l'arbre d'entraînement (10) par l'intermédiaire de l'embrayage à friction (11) ;
c) pendant le couplage progressif, retrait d'un embrayage sans friction (29) reliant le bloc fournisseur (3 ; 2) à l'arbre d'entraînement (10) au moment où il est hors charge.

9. Procédé selon la revendication 8, comprenant les étapes supplémentaires suivantes :
d) après la fermeture de l'embrayage à friction (11), couplage direct de l'arbre d'entrée (4 ; 5) du bloc d'engrenages receveur (2 ; 3) à l'arbre d'entraînement (10) ; et
e) débrayage de l'embrayage à friction (11).

10. Procédé selon la revendication 8 ou 9, dans lequel, dans l'étape c), une force commence à s'exercer dans le sens d'un mouvement de retrait avant que l'embrayage sans friction (29) soit hors charge et l'embrayage (29) cède à la force au moment où il est hors charge.
